# EUROPEAN PATENT APPLICATION

(11) **EP 4 134 901 A1**
(43) Date of publication of application: **15.02.2023**
(21) Application number: 22183482.3
(22) Date of filing: 07.07.2022
(51) Int. Cl.: G06Q 40/02

(54) **SYSTEM, METHOD AND APPARATUS FOR MAKING CREDIT DECISIONS AT A USER-LEVEL**

(30) Priority: 13.08.2021 US 202117401938
(71) Applicant: Affirm, Inc., San Francisco, CA 94108 (US)
(72) Inventor: DAO, Angela, San Francisco, 94108 (US); JAGADISH, Sidd, San Francisco, 94108 (US); LEMIRE, Donald, San Francisco, 94108 (US); WU, Yonglin, San Francisco, 94108 (US); MAI, Quynh, San Francisco, 94108 (US); CARROLL, Colleen, San Francisco, 94108 (US); TADINA, Anthony, San Francisco, 94108 (US); PALACIOS, Zachary, San Francisco, 94108 (US); BUSHOY, Yael, San Francisco, 94108 (US); CHEN, Wei, San Francisco, 94108 (US)
(74) Representative: Piotrowicz, Pawel Jan Andrzej

(57) **Abstract**

A method for employing user-level credit decisions in relation to extension of a loan to a user may include receiving prequalification information associated with a user and employing a first credit extension model to execute a first credit extension decision based on the prequalification information, where the first credit extension decision is associated with a first credit limit. The method may include employing a second credit extension model, different from the first credit extension model, to execute a second credit extension decision based on the prequalification information and relationship information associated with current and prior interactions between the user and a lending entity making the first credit extension decision and the second credit extension decision, where the second credit extension decision is associated with a second credit limit. The method may also include determining, based on the first and second credit extension decisions, whether to extend a predefined credit limit to the user.

## Description

### TECHNICAL FIELD

Example embodiments generally relate to financial industry technologies and, in particular, relate to apparatuses, systems, and methods for enabling credit decisions to be made at a user-level instead of at a transaction level.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

Decisions regarding whether to underwrite a particular transaction are typically made at a particular point in time, and are dependent on the information that is considered germane to making the decisions at that time. Thus, for the same user, a new decision (which could potentially be inconsistent with prior and even immediately prior decisions) is made for each transaction. The decision itself is often made in consideration of many inputs (e.g., hundreds of input factors). Thus, even if a particular user was approved for a prior transaction, such prior approval may have no bearing on the decision being made for the current transaction. If the user is declined, the reason for declining may be because the credit scoring model, exposure, velocity, repayment history, or other factors have crossed a particular threshold without regard to the user's standing determined for a different transaction. The user may even have successfully paid off a prior loan, or exhibited other good behavior that, instead of being rewarded, is either not rewarded or even makes the user feel punished for the good behavior.

As can likely be appreciated from the description above, the potential for inconsistency in making underwriting decisions can be very frustrating for users. Moreover, causing user frustration can dissuade users from establishing loyalty to any particular brand or service. Given that the nature of merchant relationships tends to benefit consumers (users) on a transactional level, but may be extremely confusing on a user-level, it may be desirable to define an improved, user-level credit model that can be applied to making underwriting decisions.

### BRIEF SUMMARY OF SOME EXAMPLES

Accordingly, some example embodiments may enable the provision of technical means by which to provide a foundation for user-level credit.

In an example embodiment, a method for employing user-level credit decisions in relation to extension of a loan to a user may be provided. The method may include receiving prequalification information associated with a user and employing a first credit extension model to execute a first credit extension decision based on the prequalification information, where the first credit extension decision is associated with a first credit limit. The method may also include employing a second credit extension model, different from the first credit extension model, to execute a second credit extension decision based on the prequalification information and relationship information associated with current and prior interactions between the user and a lending entity making the first credit extension decision and the second credit extension decision, where the second credit extension decision is associated with a second credit limit. The method may also include determining, based on the first and second credit extension decisions, whether to extend a predefined credit limit to the user.

In another example embodiment, an apparatus for employing user-level credit decisions in relation to extension of a loan to a user may be provided. The apparatus may include processing circuitry configured for receiving prequalification information associated with a user and employing a first credit extension model to execute a first credit extension decision based on the prequalification information, where the first credit extension decision is associated with a first credit limit. The processing circuitry may also be configured for employing a second credit extension model, different from the first credit extension model, to execute a second credit extension decision based on the prequalification information and relationship information associated with current and prior interactions between the user and a lending entity making the first credit extension decision and the second credit extension decision, where the second credit extension decision is associated with a second credit limit. The processing circuitry may also be configured for determining, based on the first and second credit extension decisions, whether to extend a predefined credit limit to the user.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for extending user-level credit for financial transactions according to an example embodiment;
FIG. 2 illustrates a functional block diagram of a credit extension platform according to an example embodiment;
FIG. 3 illustrates a block diagram showing control flow associated with user-level credit in accordance with an example embodiment;
FIG. 4 illustrates a block diagram showing a user-level credit system interactions in accordance with an example embodiment; and
FIG. 5 illustrates a block diagram of a method of employing user-level credit decisions in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a credit extension platform that can be instantiated at an apparatus comprising configurable processing circuitry. The processing circuitry may be configured to execute various processing functions on financial data using the techniques described herein. The credit extension platform may, for example, be configured to provide a way to determine, on an individual user-level basis, whether to extend credit to a user that has known behaviors or reputation built up with a company that can extend credit in spite of a decline decision being generated based on more general factors. Thus, for example, a user that is known to the company through past interactions can, even if granting credit based on conventional methods is not recommended, be granted a suitable amount of credit. The user's behavior with the company can therefore not only enable the user to obtain some amount of credit when most companies would otherwise decline, but the user may be enabled to build up additional reputational and behavioral rewards. Thus, example embodiments may not only enable the user to obtain credit when others may not grant it, but the user may be incented to exhibit continued good repayment habits and build additional credit opportunities and expect more consistency in approval of credit requests.

Example embodiments may be employed in multiple contexts, which may include underwriting decisions made at checkout or time of purchase though at least some of the decision making may be made during prequalification. In relation to underwriting decisions, macroeconomic conditions and seasonality may have an impact on the business of a financial institution or organization. In response to these factors, and various tuning efforts that may normally be employed, a typical transactional credit model may utilize all inputs and factors to make a credit extension decision (i.e., whether to extend credit to the user to pay for a transaction) for a user independent of any prior request by the same user, or recent (or repeated) user behavior. Instead, the transactional credit model would be expected to consider the amount of credit requested, the credit score of the user, and numerous other conventional factors that do not include specific records of past and recent transactions with a particular company in order to make the credit extension decision.

As noted above, this can leave a user who recently paid off a loan, made an on time payment, or was approved for an extension of credit on a different transaction vulnerable to inconsistent credit extension decision results. To alleviate this potential, example embodiments may provide for an alternate, and internal (to a particular company) credit extension decision modification process. The alternate and internal credit extension decision modification process may monitor behavior between the specific user and the particular company to perform a separate (although simultaneously determined) credit extension decision. The separate credit extension decision, which may be made in parallel with the original (and conventional) credit extension decision, may be used to grant a credit extension to the specific user in cases where the user qualifies by different standards. The credit extension granted by these alternate means may not only serve to enable the specific user (as a known user) to obtain credit for a current transaction, but continued positive performance or behavior exhibited by the specific user may enable expansion of the services that the specific user can receive when dealing with the particular company.

Thus, example embodiments may enable a first credit extension decision to be made via a first credit extension model, and simultaneously enable a second credit extension decision to be made via a second credit extension model. The first credit extension model may be a conventional model that uses generic and traditional methods for making credit extension decisions. However, the second credit extension model may employ relationship information specific to interactions between the user making the credit extension request and the entity considering the credit extension request (i.e., the company that underwrites the loan or credit extension being requested). This relationship information evolves over time as the user and the entity continue to interact so that the user can improve his/her standing with the entity to get higher credit limits or loyalty rewards over time. The user can therefore experience the benefits of continued positive (e.g., relationship enhancing) behaviors, and the entity can build a loyal customer base.

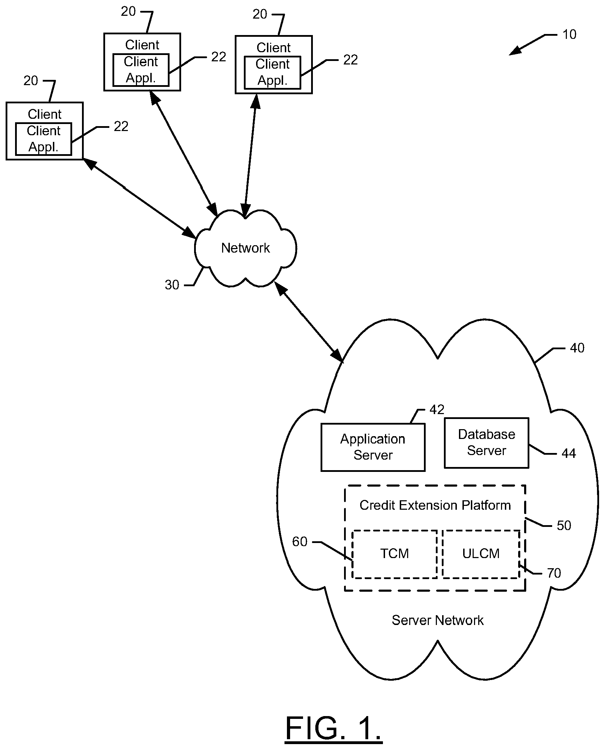

An example embodiment of the invention will now be described in reference to FIG. 1, which illustrates an example system in which an embodiment of the present invention may be employed. As shown in FIG. 1, a credit management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a vendor company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to credit extension platform 50, and more particularly relating to facilitating financial computations and calculations related to decisions associated with extensions of credit (e.g., loans where, for example, the loans may include a buy now, pay later loan, or other products associated with credit or lending transactions). For example, the application server 42 may be configured to provide (via the credit extension platform 50) execution of instructions, and storage of information descriptive of events or activities, associated with the credit extension platform 50 and the execution of a financial computations, calculations and modeling on behalf of a user of the system 10 located at one of the clients 20, or interacting with a user located at one of the clients 20, in real time. In some cases, the financial transaction may include obtaining buy now, pay later financing, and the activities associated therewith may include the provision of a loan/product application detailing information required by the lender (and operator of the credit extension platform 50) to determine whether credit, funds, or other products can be provided to the customer based on information provided in the loan/product application. However, example embodiments may also apply to other types of loans.

In some embodiments, the credit extension platform 50 may be a technical device, component or module affiliated with the lender or an agent of the lender. Thus, the credit extension platform 50 may operate under control of the lender or agent of the lender to be a technical means by which to carry out activities under direction of the lender/agent or employees thereof. As such, in some embodiments, the clients 20 may access the credit extension platform 50 services, and more particularly contact the credit extension platform 50 online and utilize the services provided thereby. However, it should be appreciated that in other embodiments, an application (e.g., the client application 22) enabling the clients 20 to interact with the credit extension platform 50 (or components thereof) may be provided from the application server 42 (e.g., via download over the network 30) to one or more of the clients 20 to enable recipient clients 20 to instantiate an instance of the client application 22 for local operation such that the credit extension platform 50 may be a distributor of software enabling individual users to utilize the credit extension platform 50. Alternatively, another distributor of the software may provide the client 20 with the client application 22, and the credit extension platform 50 may communicate with the client 20 (via the client application 22) after such download.

In an example embodiment, the client application 22 may therefore include application programming interfaces (APIs) and other web interfaces to enable the client 20 to conduct operations as described herein via the credit extension platform 50. The client application 22 may include a series of control consoles or web pages including a landing page, onboarding services, activity feed, account settings (e.g., user profile information), transaction management services, payment management services and the like in cooperation with a service application that may be executed at the credit extension platform 50. Thus, for example, the client application 22 may enable the user or operator to articulate and submit queries, make credit extension requests, initiate and pay for transactions using funds associated with a credit extension request, and/or the like using the credit extension platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the credit extension platform 50 configured to operate in accordance with an example embodiment of the present invention. In this regard, for example, the credit extension platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the credit extension platform 50. Thus, it should be appreciated that the functions of the credit extension platform 50 can be conducted via client-server based interactions involving communications between clients 20 and the server network 40, or may be conducted locally at one of the clients 20 after an instance of the credit extension platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the credit extension platform 50 residing at the application server 42 or at one of the clients 20). Thus, the credit extension platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the credit extension platform 50 may operate to enable the user associated with a given one of the clients 20 to setup an account (i.e., a user account) with an entity (e.g., a lender) that operates the credit extension platform 50. After account setup, the user may initiate transactions with various vendors and fund the transactions via credit extended by the entity. Thus, the credit extension platform 50 may also enable the user to request an extension of credit or select groups of loans or other financial transactions to run modeling calculations on in association with the credit extension platform 50. In some example embodiments, the client application 22 may be used in connection with running queries, models, or calculations that are then used as the basis for interactions between the customer and the lender/agent, or between decision makers within the organization in relation to services provided to customers, or policy decisions and budgeting that is to be done by the organization under control of the credit extension platform 50. In this regard, for example, the client application 22 may be used to engage (e.g., via a website and corresponding APIs) with the credit extension platform 50 to select individual products, loans, or types of loans to be evaluated using services associated with the credit extension platform 50. The credit extension platform 50 may prompt the client 20 to provide product or loan details, or other information associated with the financial transaction that is being evaluated. In other words, the client 20 may provide a user interface function for interacting with the credit extension platform 50 to identify the information that will be evaluated using the credit extension platform 50.

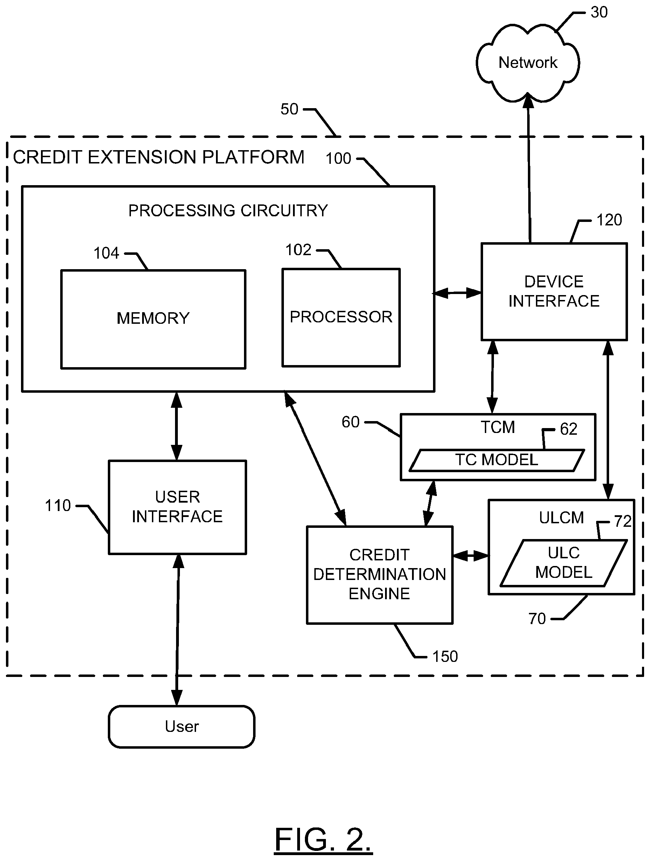

Regardless of how the queries, calculations or modeling activities are initiated, the credit extension platform 50 of FIG. 1 may be used to manage execution of such activities. Each of these activities may have its own respective timing and calculations and communications that are facilitated by the credit extension platform 50 and various components of the credit extension platform 50 may be conducted in parallel. The components, which may be functional modules that operate via API or function calls to respective segmented platforms or a monolith or other collection of rules, policies, instructions, or the like. In an example embodiment, the credit extension platform 50 may include one or both of a transactional credit module 60 (TCM in FIGS. 1 and 2) and a user-level credit module 70 (ULCM in FIGS. 1 and 2). The transactional credit module 60 may itself include or communicate with various sub-modules or components (some of which are shown in greater detail in FIG. 2) that may be used to manage control flows associated with making credit extension decisions based on inputs provided to a transactional credit model 62 (TC model in FIG. 2). In this context, the inputs include conventional inputs, which may include identity information, credit score, transaction amount, etc. Moreover, the transactional credit model 62 enables a credit extension decision to be made on a transactional level, making such decision based only on the transaction at hand and the conventional inputs, and not based on any information specific to the user's relationship or history with the entity in current or past transactions. The user-level credit module 70 may also include or communicate with various submodules or components (some of which are shown in greater detail in FIG. 2) that may be used to manage control flows associated with making credit extension decisions based on inputs provided to a user-level credit model 72 (ULC model in FIG. 2). In this context, the inputs include relationship information specific to the user and the entity and interactions therebetween (e.g., including current and past transactions between the user and the entity). Some of the structures associated with the transactional credit module 60 and the user-level credit module 70 of an example embodiment will be described in reference to FIG. 2.

FIG. 2 shows certain elements of an apparatus for provision of the credit extension platform 50 or other processing circuitry according to an example embodiment. The apparatus of FIG. 2 may be employed, for example, as the credit extension platform 50 itself (and/or the transactional credit module 60 and the user-level credit module 70) operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the credit extension platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating decision making regarding extensions of credit for loans on an user-level basis is shown. In this regard, the credit extension platform 50 may be configured to perform analysis, modeling, or other determinations based on the signaling and/or the information provided to determine whether to underwrite a financial transaction or loan and, if so, what credit level to assign to the user receiving an affirmative result in such determination. The apparatus may be an embodiment of the credit extension platform 50 or a device or component thereof including, for example, the transactional credit module 60 and the user-level credit module 70. As such, configuration of the apparatus as described herein may transform the apparatus into the credit extension platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more nontransitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the transactional credit module 60, the user-level credit module 70 and/or a credit determination engine 150, each of which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the transactional credit module 60, the user-level credit module 70 and/or the credit determination engine 150 as described below.

The transactional credit module 60 may be configured to include tools to facilitate execution of a transactional-based credit extension decision based on the transactional credit model 62. The tools may be provided in the form of various modules (or submodules) that may be instantiated by configuration of the processing circuitry 100. The transactional credit model 62 may include tables, algorithms and/or the like that define decision making parameters based on the inputs provided thereto. The inputs may include many different signals that may be used to balance risks associated with extending credit to a user (or a device from which a credit extension request is received that purports to be associated with the user). These signals typically include identity information indicating an identity of the user, and other information enabling a check of a credit score of the user, information descriptive of the transaction itself or items, price and other parameters associated with the transaction. However, numerous other signals may also be included that may be used to detect fraud or confirm various aspects of the information noted above or other information that may be useful in making credit extension decisions. The transactional credit model 62 may also include tables, algorithms and/or the like that enable computation (by the transactional credit module 60) of a credit limit that is suggested for the user based on all of the other inputs received. The credit limit given (or suggested) by the transactional credit module 60 may therefore be referred to as a transactional credit limit.

The user-level credit module 70 may be configured to include tools to facilitate execution of a user-level based credit extension decision based on the user-level credit model 72. The tools may be provided in the form of various modules (or submodules) that may be instantiated by configuration of the processing circuitry 100. The user-level credit model 72 may include tables, algorithms and/or the like that define decision making parameters based on the inputs provided thereto. The inputs may, as noted above, include many different signals that may be used to balance risks associated with extending credit to a user (or a device from which a credit extension request is received that purports to be associated with the user). These signals may include many of the same signals used by the transactional credit module 60 above. However, unlike the transactional credit module 60 (and the transactional credit model 62), the user-level credit module 70 further employs the relationship information noted above. In this regard, the relationship information may include information associated with the current and past transactions between the user and the entity that operates the credit extension platform 50. The user-level credit model 72 may also include tables, algorithms and/or the like that enable computation (by the user-level credit module 70) of a credit limit that is suggested for the user based on all of the other inputs received. The credit limit given (or suggested) by the user-level credit module 70 may therefore be referred to as a user-level credit limit.

The credit determination engine 150 may be configured to interface with both the transactional credit module 60 and the user-level credit module 70. In this regard, the credit determination engine 150 may receive credit extension decision information from each of the transactional credit module 60 and the user-level credit module 70. The credit determination engine 150 may be configured to examine the credit extensions decision information from each of the transactional credit module 60 and the user-level credit module 70 and make a final credit extension determination based on the examination.

In the context of credit extension decisions, it may generally be assumed that the transactional credit module 60 is more restrictive than the user-level credit module 70. Thus, it may either be rare, unlikely, or even impossible for the transactional credit module 60 to have an affirmative decision when the user-level credit module 70 makes a negative decision. However, if such a situation were to occur, the credit determination engine 150 may be configured to employ the credit extension decision information from the transactional credit module 60, and adopt the affirmative decision and employ the transactional credit limit determined (or suggested) by the transactional credit module 60.

If the transactional credit module 60 makes an affirmative decision when the user-level credit module 70 also makes an affirmative decision, then the credit determination engine 150 may be configured to examine the credit extension decision information from each in order to determine which has a higher credit limit (i.e., is the transactional credit limit greater or less than the user-level credit limit). The credit determination engine 150 may then adopt the affirmative decision (shared by both modules) and employ the higher of the transactional credit limit determined (or suggested) by the transactional credit module 60 or the user-level credit limit determined (or suggested) by the user-level credit module 70.

If the transactional credit module 60 and the the user-level credit module 70 each make a negative decision, then no credit limit may be assigned by the credit determination engine 150. In response, the credit determination engine 150 may inform the user that the extension of credit is declined.

If the transactional credit module 60 makes a negative decision when the user-level credit module 70 also makes an affirmative decision, then the credit determination engine 150 may be configured to resolve the conflict. In an example embodiment, the credit determination engine 150 may adopt the affirmative decision of the user-level credit module 70 and employ the user-level credit limit determined (or suggested) by the user-level credit module 70.

During a prequalification phase, the user may set up the user account via the credit extension platform 50. The user account setup may include provision of identity information, linking bank accounts, credit card accounts or other financial account information, and other provision or extraction of inputs to determine whether the user is prequalified to obtain credit. All such information (and other information in some cases) may be considered to be prequalification information in some cases. In this context, a credit extension determination may include a determination to grant the user credit up to a predefined credit limit (e.g., the transactional credit limit or the user-level credit limit). Later, when the user is at checkout (either physically or virtually) to attempt to conduct a transaction to obtain an item, the cost of the item (or amount of the transaction) may be compared to the predefined credit limit. If the amount of the transaction is below the predefined credit limit, the transaction would normally be approved and funded accordingly. If the amount of the transaction is above the predefined credit limit, the transaction would normally be declined, and the user (and vendor) may be informed of the transaction being declined. However, the credit determination engine 10 may be configured to further interact with the user to enable the transaction to be approved in some cases. For example, the user may be offered (e.g., by the credit determination engine 150) an opportunity to make a down payment or take other actions to secure approval. If such approval is secured, a credit limit may be assigned using the user-level credit limit, or any other suitable credit limit determined by the credit determination engine 150.

For approved transactions, the approval of the transaction is normally the end of the story. Credit may be extended, and a loan granted upon which payments may later be made. However, although making payments may impact the credit score or impact other inputs to the transactional credit module 60, any such impacts may be indirect and/or delayed. The fact that the credit determination engine 150 can arbitrate between two separately and simultaneously generated credit extension decisions is in itself an improvement that may enable customers to build confidence in the entity and a relationship with the entity to enhance brand or product loyalty with the presumption that more access to credit may be achieved. Nevertheless, example embodiments may provide a further improvement upon conventional operations by also utilizing the approval of the transaction, and each on time payment subsequently made, or loans paid off, etc. (i.e., relationship information) to drive immediate changes to operation of the user-level credit module 70 and/or the user-level credit limit, when appropriate.

As noted above, the predefined credit limit could be selected as either the transactional credit limit or the user-level credit limit. Of these credit limits, the transactional credit limit generally has fixed values for a given set of inputs determined by the transactional credit model 62. That said, one potential modification to the transactional credit limit (or the user-level credit limit) may be a "merchant boost" that may be generated for specific vendors or products, where the vendor or product marketer or manufacturer provides monetary incentives to drive sales. When the merchant boost applies to a transaction, the predefined credit limit may be boosted or incremented accordingly to a higher level for the item being sold by the vendor or product marketer or manufacturer. Thus, even the merchant boost is not a factor that applies at the user level. Instead, the merchant boost applies (whether to the transactional credit limit or the user-level credit limit) at the product level, or vendor level, and not at the user-level.

Meanwhile, the user-level credit limit will change over time based on the relationship information built up for a given user, and the user's corresponding user account. In this regard, the user-level credit model 72 may take in a number of inputs including the relationship information in order to define a user credit score (UCS). The UCS may be a numerical score that is specific to each user based on at least the relationship information built up by that user. When the user account is initially setup, a default UCS (or initial UCS) may be applied. The default UCS may be the same for all new (and presumably unknown) users. The initial UCS may be a UCS value calculated based on specific financial information associated with the user account (e.g., credit score as calculated by other services, bank assets, etc.) However, continued interactions between the user and the entity associated with the credit extension platform 50 will modify the default UCS to generate subsequent updated UCS values. The user-level credit model 72 may define a mapping of UCS values to corresponding values for the user-level credit limit. For each interaction including making (or not making) payments on time, a number of payments made on time in sequence, amounts of payments, remaining credit, number of loans paid off, the relationship information (which is defined by these and other factors) is modified accordingly. The modification of the relationship information may then cause a corresponding change to the UCS value assigned to the user account. As noted above, the change to the UCS value may then map directly to a corresponding new user-level credit limit. Based on the description above, it can be appreciated that the user-level credit limit defines a dynamic credit limit that is modified based on relationship information, and therefore also based on the interactions between the user and the entity associated with the credit extension platform 50.

As an example, a particular user may set up a user account and be issued a base limit for the user-level credit limit that is defined either as the default UCS or the initial UCS. The user may then conduct one or more transactions that are approved (whether via the transactional credit module 60 or by the user-level credit module 70 is typically not important). The user, over time, may then begin to build up relationship information based on the making of payments. If payments are made on time, the UCS may increase, and the user-level credit limit may correspondingly increase incrementally (as mapped in the user-level credit model 72). Further increases may occur when the loan (or loans) are paid off, based on making on time payments in sequence (i.e., the number of on time payments made in a row), and/or based on the number of payments made in total across multiple loans and transactions. The lowered UCS may map to a lower user-level credit limit. In this way, the user may build credit with the entity, and may be incented to continue to make payments on time and utilize the services of the entity. Meanwhile, if the user makes a late payment, the UCS may be decreased correspondingly.

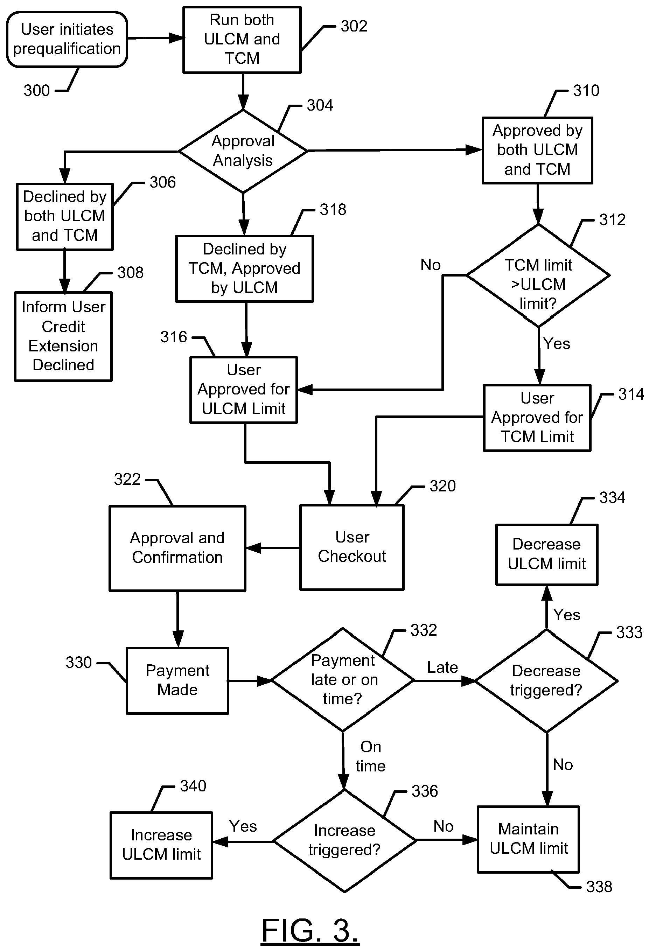

FIG. 3 illustrates a block diagram showing control flow associated with operation of the credit extension platform 50 in accordance with an example embodiment. As shown in FIG. 3, the user may initiate prequalification at operation 300. Prequalification may include setting up the user account, and participating in the product, program or service associated with the operation of the credit extension platform 50 (and particularly the employment of user-level credit). As part of prequalification, specifically in connection with determining whether the user is qualified to participate, the transactional credit module 60 and the user-level credit module 70 may each run separately and independently (and simultaneously in some cases) to determine credit extension decisions for the user at operation 302. A decision may then be made at operation 304 regarding approval analysis of the two options. If the user is declined by both the transactional credit module 60 and the user-level credit module 70 (i.e., a negative credit extension decision is reached) at operation 306, then the user may be informed at operation 308 that credit extension is declined.

If instead the user is approved by both the transactional credit module 60 and the user-level credit module 70 at operation 310, then a determination may be made at operation 312 as to which credit limit is higher (e.g., is the transactional credit limit higher than the user-level credit limit). If the transactional credit limit is higher than the user-level credit limit, then the user may be approved and the user account may be credited or assigned with the predefined credit limit being the transactional credit limit at operation 314. If the transactional credit limit is lower than the user-level credit limit, then the user may be approved and the user account may be credited or assigned with the predefined credit limit being the user-level credit limit at operation 316. As noted above, merchant boosts may be applied to the transactional credit limit and/or the user-level credit limit, when appropriate.

If the analysis of operation 304 instead results in a situation in which the user is declined by the transactional credit module 60 (i.e., receives a negative credit extension decision) and is approved by the user-level credit module 70 (i.e., receives an affirmative credit extension decision) at operation 318, then the then the user may be approved and the user account may be credited or assigned with the predefined credit limit being the user-level credit limit at operation 316. Operations 300 to 318 may all be considered to be operations that are associated with prequalification or a prequalification phase. Prequalification may occur prior to an attempt to conduct a transaction, but the distance in time could be either short (i.e., immediately before attempting to conduct a transaction) or relatively long (e.g., hours, days, or weeks prior to attempting to conduct the transaction.

In either case in which the user is approved (i.e., following either operation 314 or 316), the method of FIG. 3 will not be continued until a transaction is conducted at either a virtual or physical checkout, where the user attempts to purchase an item or service from a vendor. When the user is at checkout as shown by operation 320, the price of the item or service being purchased in the transaction may be compared to the predefined credit limit (e.g., the user-level credit limit or the transactional credit limit with or without any applicable merchant boost). If the price is below the predefined credit limit, the transaction may be approved and confirmation of loan terms may be provided and accepted by the user at operation 322. Operations 320 and 322 may therefore be operations that are associated with a checkout phase, or transaction phase that follows prequalification.

The loan may be underwritten and the corresponding repayment schedule associated with the confirmation of the loan may be applicable. A new phase may then be entered, which may include post checkout and the loan repayment period. In this new phase, a payment may be made at operation 330. A determination may be made at operation 332 as to whether the payment is on time. If the payment was not on time (i.e., was late), then a decrease to the user-level credit limit may considered at operation 333. In this regard, for example, if a threshold is exceeded or criteria are met for triggering a decrease in the user-level credit limit, a decrease to the user-level credit limit may be initiated at operation 334. Notably, if the time period for making a repayment elapses without receiving a payment, flow may also proceed to operation 333. Meanwhile, if the threshold is not exceeded or the criteria for triggering a decrease in the user-level credit limit are not met, then the user-level credit limit may be maintained at operation 338. The criteria for triggering a decrease may be based on numbers of late payments, amounts owed, credit score, or any other desirable factors including whether lower limits are available. In this regard, for example, there may be cases where a minimum value for the user-level credit limit is reached, so that no further decreases are possible.

If instead the payment was on time, then a further determination may be made as to whether a user-level credit limit increase is triggered at operation 336. If such increase is not triggered, then the user-level credit limit may be maintained at operation 338. However, if the increase is triggered, then the user-level credit limit may be increased at operation 340. Criteria for triggering the increase may include a threshold number of consecutive payments being made on time, paying off a loan, or reducing the debt level of the user below a threshold, among other possible criteria.

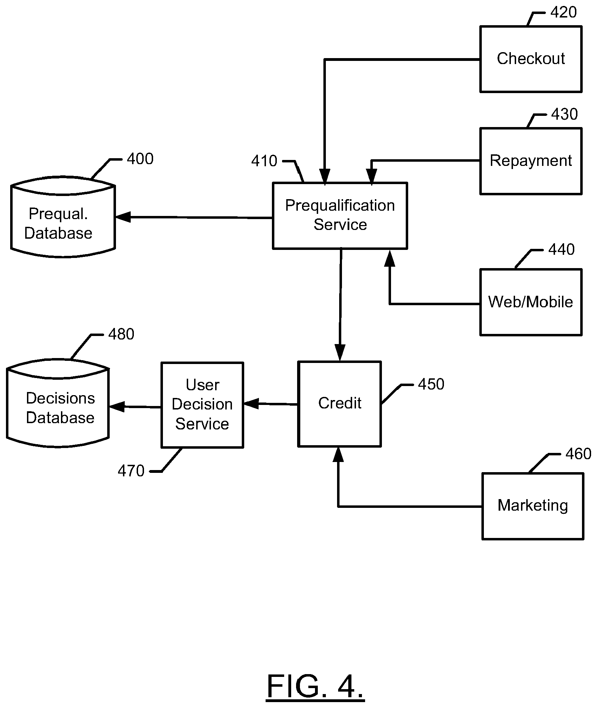

The method of FIG. 3 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. FIG. 4 is a block diagram of various systems interactions that may be employed to implement a user-level credit capability in accordance with an example embodiment.

As shown in FIG. 4, a prequalification database 400 may store information associated with prequalification of a plurality of users, each having a corresponding user account setup and maintained as described above. In an example embodiment, the prequalification database 400 may be a portion of the database server 44 of FIG. 1, or implemented in memory 104 of FIG. 2. A prequalification service 410 may interface with and update the prequalification database 400. The prequalification service 410 may be implemented from the credit extension platform 50 (e.g., by the combination of the credit extension engine 150, the transactional credit module 60 and the user-level credit module 70.

Checkout information may be provided to the prequalification service 410 by various checkout systems 420 associated with respective different vendors or websites. Repayment information may also be provided to the prequalification service 410 by various repayment systems 430 associated with respective different vendors or websites. Web or mobile devices 440 may be examples of clients 20 that may interact with the prequalification service 410 to setup user accounts and to initiate transactions (via the checkout systems 420) or may payments (via the repayment systems 430). The prequalification service 410 may handle all operations associated with operations 300 to 318 in FIG. 3 of the prequalification phase described above.

Credit system 450 may be employed to make credit extension decisions based on information from the prequalification service 410, and to augment (or boost) credit limits based on marketing information from a marketing system 460, which may indicate when a merchant boost is applicable. A user decision service 470 may be used to consider user-level credit limit increases as described above in reference to operations 330 to 338 in FIG. 3. All information resulting from these decisions may be recorded in decisions database 480.

As can be appreciated from the description above, the user may be informed of each change to the user-level credit limit, and perhaps also the reason for such change (e.g., the threshold crossed, or the behavior rewarded). Such information may incentivize the user to continue to exhibit behaviors that lead to increases in the user-level credit limit, and the cessation of behaviors that lead to reductions. The corresponding incentives and immediately perceptible rewards may ultimately provide a technical means by which to create a win/win relationship between the entity and the user.

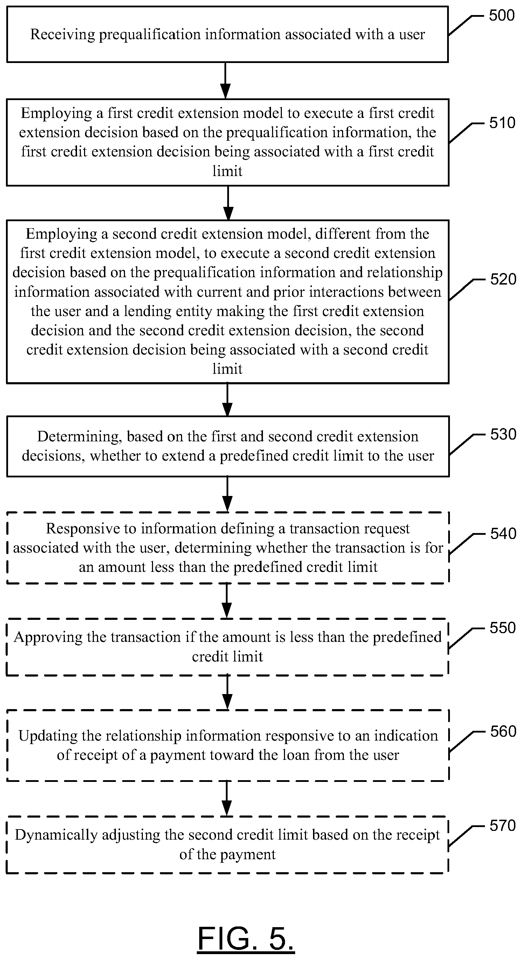

From a technical perspective, the credit extension platform 50 described above may be used to support some or all of the operations described above. As such, the apparatuses described in FIGS. 2 and 4 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of for employing user-level credit decisions in relation to extension of a loan to a user according to one embodiment of the invention is shown in FIG. 5. The method may include receiving prequalification information associated with a user at operation 500 and employing a first credit extension model to execute a first credit extension decision based on the prequalification information, where the first credit extension decision is associated with a first credit limit at operation 510. The method may also include employing a second credit extension model, different from the first credit extension model, to execute a second credit extension decision based on the prequalification information and relationship information associated with current and prior interactions between the user and a lending entity making the first credit extension decision and the second credit extension decision, where the second credit extension decision is associated with a second credit limit at operation 520. The method may also include determining, based on the first and second credit extension decisions, whether to extend a predefined credit limit to the user at operation 530.

In an example embodiment, an apparatus for performing the method of FIG. 5 above may comprise a processor (e.g., the processor 102) or processing circuitry configured to perform some or each of the operations (500-530) described above. The processor may, for example, be configured to perform the operations (500-530) by performing hardware implemented logical functions, executing stored instructions, or executing algorithms for performing each of the operations. In some embodiments, the processor or processing circuitry may be further configured for additional operations or optional modifications to operations 500 to 530.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include optional operations (shown in dashed lines in FIG. 5) such as, responsive to information defining a transaction request associated with the user, determining whether the transaction is for an amount less than the predefined credit limit at operation 540, and approving the transaction if the amount is less than the predefined credit limit at operation 550. Alternatively or additionally, the method may include updating the relationship information responsive to an indication of receipt of a payment toward the loan from the user at operation 560, and dynamically adjusting the second credit limit based on the receipt of the payment at operation 570. Within this context, dynamically updating the second credit limit may include, for example, lowering the second credit limit if the payment is late, or increasing the second credit limit if the payment is on time. Alternatively or additionally, dynamically updating the second credit limit may include increasing the second credit limit if the payment is part of a sequence of on time payments, and a number of the on time payments in the sequence exceeds a threshold. In an example embodiment, employing the first and second credit extension models may be performed simultaneously. In some cases, the first credit extension model may be a transactional credit model, and the second credit extension model may be a user-level credit model. In an example embodiment, determining whether to extend the predefined credit limit may include extending the first credit limit responsive to the first and second credit decisions both being affirmative and the first credit limit being higher than the second credit limit. In some cases, determining whether to extend the predefined credit limit may include extending the second credit limit responsive to the first and second credit decisions both being affirmative and the second credit limit being higher than the first credit limit. In an example embodiment, determining whether to extend the predefined credit limit may include extending the second credit limit responsive to the first credit decision being negative and the second credit decision being affirmative.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for employing user-level credit decisions in relation to extension of a loan to a user, the method comprising:
receiving prequalification information associated with a user;
employing a first credit extension model to execute a first credit extension decision based on the prequalification information, the first credit extension decision being associated with a first credit limit;
employing a second credit extension model, different from the first credit extension model, to execute a second credit extension decision based on the prequalification information and relationship information associated with current and prior interactions between the user and a lending entity making the first credit extension decision and the second credit extension decision, the second credit extension decision being associated with a second credit limit; and
determining, based on the first and second credit extension decisions, whether to extend a predefined credit limit to the user.

2. The method of claim 1, wherein the first credit extension model is a transactional credit model, and
wherein the second credit extension model is a user-level credit model.

3. The method of claim 2, wherein determining whether to extend the predefined credit limit comprises extending the first credit limit responsive to the first and second credit decisions both being affirmative and the first credit limit being higher than the second credit limit.

4. The method of claim 2, wherein determining whether to extend the predefined credit limit comprises extending the second credit limit responsive to the first and second credit decisions both being affirmative and the second credit limit being higher than the first credit limit.

5. The method of claim 2, wherein determining whether to extend the predefined credit limit comprises extending the second credit limit responsive to the first credit decision being negative and the second credit decision being affirmative.

6. The method of claim 1, further comprising:
responsive to information defining a transaction request associated with the user, determining whether the transaction is for an amount less than the predefined credit limit; and
approving the transaction if the amount is less than the predefined credit limit.

7. The method of claim 1, further comprising:
updating the relationship information responsive to an indication of receipt of a payment toward the loan from the user, and
dynamically adjusting the second credit limit based on the receipt of the payment.

8. The method of claim 7, wherein dynamically updating the second credit limit comprises lowering the second credit limit if the payment is late, or increasing the second credit limit if the payment is on time.

9. The method of claim 7, wherein dynamically updating the second credit limit comprises increasing the second credit limit if the payment is part of a sequence of on time payments, and a number of the on time payments in the sequence exceeds a threshold.

10. The method of claim 1, wherein employing the first and second credit extension models is performed simultaneously.

11. An apparatus for employing user-level credit decisions in relation to extension of a loan to a user, the apparatus comprising processing circuitry configured to execute the method of any of claims 1-10.
